# EUROPEAN PATENT SPECIFICATION

(11) **EP 2 071 901 B1**
(45) Date of publication and mention of the grant of the patent: **15.08.2012**
(21) Application number: 07122842.3
(22) Date of filing: 11.12.2007
(51) Int. Cl.: H05B 3/34, B60S 1/02

(54) **Window with resistance heating element**
Fenster mit Widerstandserwärmungselement
Fenêtre dotée d'un élément de chauffage à résistance

(43) Date of publication of application: 17.06.2009
(73) Proprietor: Volvo Car Corporation, 405 31 Göteborg (SE)
(72) Inventor: Oskarsson, Maria, 42472 Olofstorp (SE); Hedenberg, Jenny, 41763 Göteborg (SE); Rapo, Jan, 41512 Göteborg (SE); Petersson, Martin, 41721 Göteborg (SE)
(74) Representative: VALEA AB

(56) References cited:
- EP-A- 1 605 729
- US-A- 5 804 817

## Description

### TECHNICAL FIELD

The present invention relates to an electrically heated window with a resistance heating element, more specifically the present invention relates to a window with a resistance heating element which is arranged to be in working cooperation with an imaging device such as a camera.

### BACKGROUND OF THE INVENTION

As road safety bodies, government agencies, vehicle manufacturers and other interested parties strive to increase road safety, despite increasing congestion and the proliferation of potential distractions to drivers, one approach adopted is to provide technical aids to drivers to assist them to drive safely. For example, one such aid may monitor a vehicle's course relative to the road ahead, and alert the driver when deviations occur. Alternatively, it is possible to monitor the separation between one vehicle and the next, and alert the driver when the separation drops below a desired value. In more advanced systems, it is possible to arrange for the vehicle to take remedial action automatically. A further possibility is to provide assistance to the driver in conditions of poor visibility due to adverse weather or low light levels, e.g. in fog or at night. In US 5,804,817, a sensor device for detecting the degree of wetting and/or contamination of e.g. windshields of motor vehicles disclosed. The windshield comprises a heating element extending across the area which the sensor device uses for detecting the degree of wetting.

It is also desirable to assist the driver to manoeuvre the vehicle without incident by using cameras to augment the driver's vision in areas where it is difficult for the driver to see, e.g. immediately around the vehicle below the level of the windows, especially to the sides or rear of the vehicle.

All such systems rely on some type of imaging device, for example a camera, to view or monitor the vehicle's surroundings, be it the road itself, other vehicles, etc. It is self-evident that the functioning of such systems will be adversely affected if the image formed by the device is impaired in some way. Accordingly, one prerequisite is for the imaging device to have a clear view, free of condensation, frost, ice, moisture or snow on the window, regardless of weather conditions.

In the patent publication of EP 1,605, 729 A2 is a double glassed window described. The double glassed window may be used in a vehicle such as a car. The document further describes the use of an imaging device. To prevent the imaging of the imaging device form being obstructed by ice or moisture arranged on the double glassed window, the double glassed window is arranged with a conducting heating element laminated between the double glasses of the window. The conducting element can be thin tungsten wires which are typically 15-50 µm thick and arranged 1.8-3.0 mm apart. The tungsten wires can be arranged along a path which may be crimped. However crimped wires or wires with a meander form have been found to glare, i.e. to provide multiple points of unwanted reflections, when taking images with the imaging device especially during sunny weather. Hence these forms provide drawbacks for sensitive imaging devices. This problem becomes readily apparent when such imaging devices are arranged to processing units such as computers, which are to read and analyze the captured image(s).

The described wires may further be arranged in a boustrophedon manner. However for sensitive imaging devices and the connected analysis devices, these kinds of patterns can cause interference with the readings of the imaging device and the interpretation of the captured image(s), for instance when imaging specific parameters such as the centre line of the road or the horizon. It therefore remains to provide a solution which provides both a reduced tendency to glare and which minimizes the risk of interference with sensitive imaging devices and its analyzing equipment.

### SUMMARY OF THE INVENTION

One object of the present invention is to reduce the interference of the heating element with the imaging of the imaging device. Another object of the present invention is to reduce the amount of glare points from the heating element which could interfere with the imaging of the imaging device. These objects are at least partly solved by an electrically heated window according to the present invention. A window according to the present invention comprises a first and a second side, equivalent with an interior and an exterior side after assembly with a vehicle. The window is intended to be fitted with an imaging device which views an object to be imaged through a viewing area of the window. The viewing area of the window comprises a first and a second edge, and an upper and a lower edge. The window further comprises a resistance heating element comprising a first and a second electrical connection means for connection to an electrical supply, and at least one conducting wire extending between the first and second electrical connection means. The at least one conducting wire extends across the viewing area a plurality of times along arc shaped paths wherein the arc shaped path being equal or less than a half wavelength, i.e. each of said arc shaped paths comprises a base (B) and one point (P), so as to minimize the amount of glare points along said resistance heating element. The present invention provides for a window which can heat an area to remove moisture or ice to provide a clear view for the imaging device. The window further provides a resistance heating element which reduces the risk of unwanted interaction with the imaging device and/or the connected analyzing equipment such as a processing unit, e.g. a computer.

The present invention provides for a window which can heat an area to remove moisture or ice to provide a clear view for the imaging device. The window further provides a resistance heating element which reduces the risk of unwanted interaction with the imaging device and/or the connected analyzing equipment such as a processing unit, e.g. a computer.

The arc shaped path can comprise a form with a radius between 20-200 mm, preferably 30-150 mm, even more preferably 30-125 mm, most preferred 35-100 mm. these intervals have been found to provide the minimum of interaction between measure parameters and at the same time provide a minimum of glare points which can disturb the reading of the imaging or any subsequent analysis thereof. It has further been found that an advantageous pattern to both heat and to fulfil the above mentioned advantages can be achieved if at least 2 of 3 of the radiuses are different with respect to each other. The electrically heated window according to the present invention can further be distinguished by that the arc shaped path comprises a subsequently equal or increasing radius towards the lower edge of the viewing area. For viewing areas which exhibit a pyramidal, cone or funnel like shape, this configuration has been found to be extra advantageous.

In a more specific embodiment of the present invention, the electrically heated window and a first arc shaped path closest to the upper edge of the viewing area comprises a first radius R1, and a subsequent second arc shaped path comprises a second radius R2. The subsequent following arc shaped paths wherein at least; a third arc shaped path comprises a third radius R3, a forth arc shaped path comprises a forth radius R4, and in that only the first radius and the second radius, R1 and R2 are substantially equal. Optionally a fifth arc shaped path with a fifth radius R5 and a sixth arc shaped path with a sixth radius R6 may be present. In one embodiment of the present invention the conducting wire crosses the viewing area between 4-20 times. Although 4-10 times has been found to be preferred.

The above mentioned arc shaped paths can be said to comprise a base B and a point P. Although the base and the point are fictional, they serve as a descriptive identification to illustrate the direction of the curvature of the arc shaped path. In this sense the point P faces towards the lower edge of the viewing area and the base B faces towards the upper edge of the viewing area. It should be noted that, something defined as extending towards the upper edge of the viewing area also extends towards the upper edge of the window, following below of the definition of upper and lower. In an embodiment of the present invention the point P faces towards the upper edge of the viewing area and the base B faces towards the lower edge of the viewing area. It is further within the boundaries of the present invention that the point P faces towards the first edge of the viewing area and the base B faces towards the second edge of the viewing area or alternatively that the point P faces towards the second edge of the viewing area and the base B faces towards the first edge of the viewing area. Combinations of the above and mixtures of the above are also possible, e.g. a spiral pattern is a combination of arc shaped paths with points pointing both towards the upper and lower edge of the viewing area, although such pattern may be somewhat less preferred. That part of the wire which ends in the centre of the spiral pattern is thereafter preferably directed along an arc shaped path out from the spiral pattern and is isolated from the remaining conducting wire to prevent short circuiting of the system. It remains important however that no vertical or horizontal straight lines are present as such have been found to interfere with the imaging device and analyse of the captured data (e.g. pictures).

The conducting wire is preferably arranged on the first side of the window. After the window has been assembled with a vehicle, the first side corresponds to the interior side of the window. In practise the first side is usually the concave side of the window and the second side is usually the convex and exterior side of the window after assembly.

To provide an absolute minimum of interference from the conducting wire, the arc shaped path preferably extends between, and past, the first and second edge of the viewing area. In this embodiment, no vertical lines of conducting wire are arranged within the viewing area. The viewing area can comprise a virtual vertical centre line wherein the arc shaped paths are arranged symmetrically with respect the vertical centre line.
Optionally the conducting wire is 0.1-0.5 mm thick, preferably between 0.2-0.4 mm thick within the viewing area.

The window according to the present invention may further be equipped with at least a second resistance heating element. The present invention further relates to a vehicle comprising an electrically heated window according to the present invention and an imaging device, optionally the imaging device is arranged with a glare protection device.

### BRIEF DESCRIPTION OF THE DRAWINGS

The present invention will be described in greater detail with reference to the accompanying figures, wherein;
Figure 1 shows a schematic overview of an electrically heated window used in a vehicle;
Figure 2 shows a schematic overview of an electrically heated window;
Figure 3 shows parts of a window according to the present invention arranged with an imaging device with a view as seen straight into the imaging device;
Figure 4 shows the embodiment of the present invention shown in figure 2 with a view in perspective;
Figure 5 shows a pattern of conducting wire of a window according to one embodiment of the present invention.

### DETAILED DESCRIPTION OF PREFERRED EMBODIMENTS

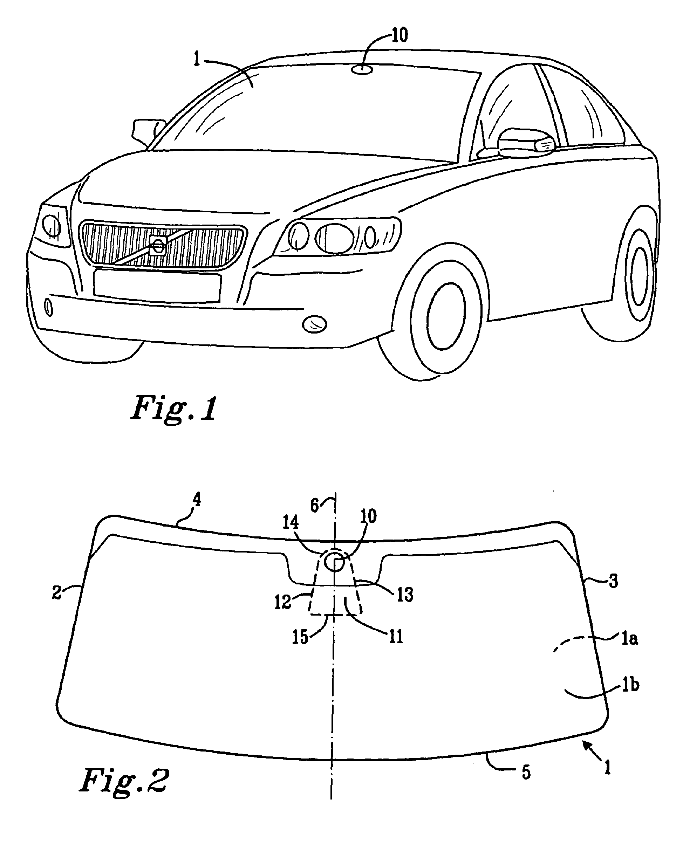

Figure 1 shows an electrically heated window 1 according to the present invention assembled in a vehicle. An imaging device 10 is arranged to the window and partly to the inner ceiling of the vehicle.

Figure 2 shows a schematic view of the electrically heated window 1 (hereafter referred to as the window) intended to be fitted with the imaging device 10 such as a CCD (charge coupled device) or a CMOS (complementary metal oxide semiconductor) image sensor camera. The shown window 1 is more specifically a front windshield for a vehicle.

The imaging device 10 can be connected to processing unit such as a computer (not shown). During use, the imaging device captures images of e.g. the road. The processing unit thereafter analyses the images and identifies wanted or unwanted features. For instance, the processing unit can be arranged to identify the centre line of the road, the processing unit relates the position of the centre line with the position of the vehicle and can dependent upon the result of the analysis, initiate an action. Such an action can be a voice alert telling the driver to steer the vehicle to a safe position, initiate alert light signals to other drivers, correct the steering of the vehicle directly, or the like. Any action is possible within the boundaries of the present invention.

To secure the functionality of such a system from being blocked by ice, frost, snow, condensation, moisture or the like, a window according to the present invention is very advantageous. As shown in figure 2, the window 1 comprises an interior and an exterior side 1 a, 1 b, a first and a second edge 2, 3 and an upper and a lower edge 4, 5. When the window 1 is mounted on a vehicle, the interior side 1 a of the window 1 is intended to be facing towards the interior of the vehicle while the exterior side 1 b of the window 1, is intended to face away from the interior of the vehicle. The imaging device 10 is arranged on the interior side 1 a of the window 1 in the near proximity of the upper edge 4 of the window 1. The image device 10 receives the image through a viewing area 11 on the window. The viewing area 11 is the area through which the projected image is received by the imaging device through the window, i.e. the area through which the imaging device sees an object through the window. The viewing area 11 comprises a first and a second edge 12, 13 and an upper and a lower edge 14, 15.

The terms upper and lower are relative terms and should be related to a vehicle positioned on its wheels (if present) in a normal and a ready to use fashion. In this sense the upper edge 13 of the viewing area 11 is intended to be closer to the roof of the vehicle while the lower edge 14 of the viewing area 11 is intended to be closer to the ground.

The window 1 has a centre line 6 which extends vertically between the upper and lower edges 14, 15 of the window 1. The window 1 has substantially mirror symmetry about the centre line 6. As mentioned the imaging device 10 is arranged on the interior side 1 a of the window 1 in the near proximity of the upper edge 4 of the window 1. It is further arranged so that the centre line 6 crosses the centre of the viewing area 11 in a vertical manner between the upper and lower edge 14, 15 of the viewing area 11. The window 1 and the viewing area 11 is provided with a resistance heating element to keep the at least the viewing area 11 free from ice and moisture.

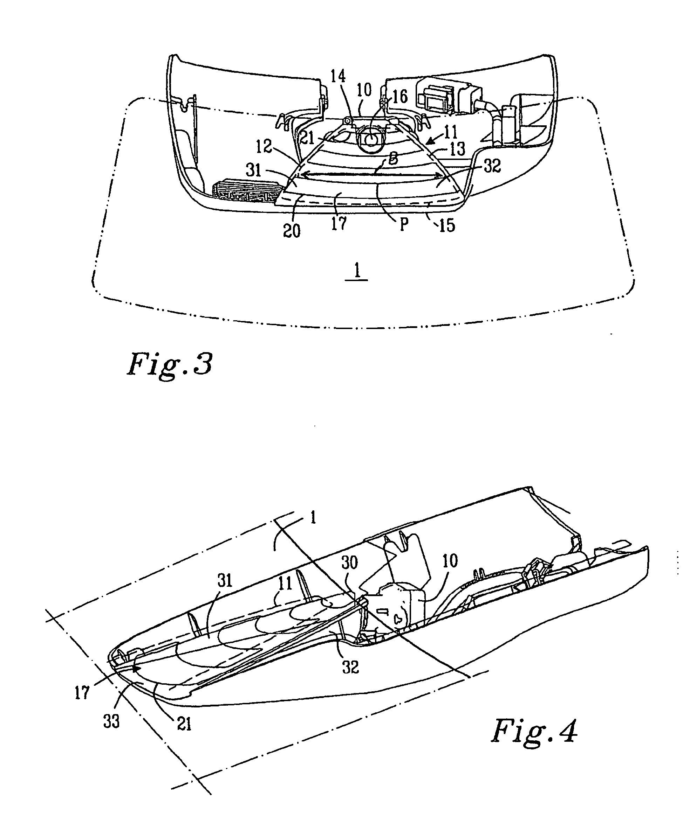

Figure 3 shows the present invention in the form of parts of a window 1, an imaging device 10 and a resistance heating element 20, with a view straight into the imaging device 10. As can be seen the window 1 is only partly illustrated for clarity reasons. The imaging device 10 is equipped with a lens 16. Arranged in a tray like configuration to the lens is a glare protection device 17, to prevent unwanted light reflections to enter the lens. The viewing area 11 is illustrated as a dotted line which in this embodiment of the present invention substantially corresponds to the form of the glare protection device 30. A resistance heating element 20 in the form of a silver and cupper based conducting wire 21 extends across the viewing area 11 along an arc shaped path between the first and second side 12, 13 of the viewing area 11.

The arc shaped path along which the resistance heating element 20 extends is equal or less than a half wave length. This feature minimizes the amount of possible glare points along the resistance heating element 20. In practice only one glare point per crossing point is achieved in this way while still maintaining a form on the resistance heating element which minimizes the risk of the imaging device and its connected sensor device to miss interpret the resistance heating element as being a part of the image captured by the imaging device and thereby to also to miss interpret the resistance heating element as an object which requires an analysis.

In figure 3 the arc shaped paths can be seen with a base B and a point P wherein the point P points towards the lower edge 15 of the viewing area 11 and the base B is arranged towards the upper edge 14 of the viewing area 11, however in an alternatively embodiment of the present invention, the point P of the arc shapes paths can point towards the upper side 14 of the viewing area 11 and the base B towards the lower edge 15 of the viewing area 11.

Figure 4 shows the embodiment of the present invention shown in figure 3 in perspective. As can be seen the window 1 is only partly illustrated for clarity reasons. The viewing area 11 is shown with dotted lines and is for clarity reasons illustrated slightly displaced with respect to the conducting wire 21. The glare protection device 17 which is substantially a tray like configuration comprises an opening 30 at one end at which the imaging device 10 is arranged. From the opening 30 of the glare protection device are a first and a second side wall 31, 32 arranged on either side of a bottom 30, the first and the second side wall extends from the opening 30 and merges with the bottom 33 of the glare protection device 17 at the far end of the glare protection device 17 opposite the opening 30. The configuration of the glare protection device 17 permits the glare protection device 17 to be attached to the interior side of a window, preferably so that the imaging device is arranged with an angle between 2-10 ° more preferably between 2-6 °, with respect to a horizontal plane. The glare protection device 17 prevents unwanted sun reflections to enter the imaging device, it further enables a quick and easy assembly of the imaging device with the window and the vehicle.

In one embodiment of the present invention the glare protection device 17 substantially defines the viewing area 11, this is advantageous because unwanted sun reflection is reduced to a minimum.

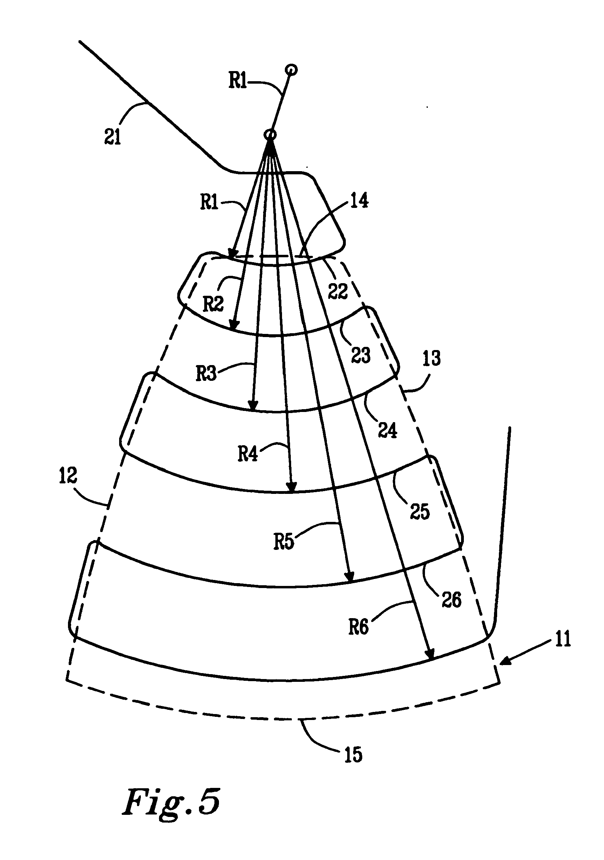

Turning to figure 5, figure 5 shows an embodiment in which the conducting wire 21 starts at the upper side 14 of the viewing area 11 along a first arc shaped 22 path across the viewing area, the first arc shaped path 22 has a radius R1. The first arc shaped path diverges into a path substantially parallel with the first and second edge 12, 13 of the viewing area outside the viewing area 11 to thereafter return back across the viewing area 11 along a second arc shaped path 23 with a radius R2, and so forth. The third arc shaped path 24 exhibit a radius R3, the forth arc shaped path a radius R4, the fifth arc shaped path a radius R5, the sixth arc shaped path a radius R6, etc. Generally the radius R2, which defines the second arc shaped path close to the upper edge 14 of the viewing area 11, is less than the subsequent radius R3 of the subsequent arc shaped path 24. But as is shown in figure 4, the first radius R1 is substantially equal to the second radius R2. Hence in a preferred embodiment of the present invention the relationship between the radius are R1=R2<R3<R4<R4<R5<R6. In the shown embodiment of the present invention the arc shaped path Vs radius is given in table 1.

| No. of arc shaped crossings (reference no. from figure 4 within brackets) | Radius (mm) |
|---|---|
| 1 (22) | R1 = 34 |
| 2 (23) | R2 = 34 |
| 3 (24) | R3 = 50 |
| 4 (25) | R4 = 67 |
| 5 (26) | R5 = 98 |
| 6 (27) | R6 = 121 |

The resistance heating element 20, and specifically the conducting wire 21, is preferably made of silver and cupper based material with a thickness of about 0.1-0.5 mm, preferably between 0.2-0.4 mm.

The resistance heating element 20 is naturally connected to the vehicle electrical system when assembled with a vehicle. Such a connection is conventional and do not need to be described in greater detail.

## Claims

1. An electrically heated window (1), comprising a first and a second side (1a, 1 b), intended to be fitted with an imaging device (10) which views an object to be imaged through a viewing area (11) of the window (1),
said viewing area (11) of said window (1) comprises a first and a second edge (12, 13) and an upper and a lower edge (14, 15),
said window (1) comprises a resistance heating element (20) comprising a first and a second electrical connection means for connection to an electrical supply, and at least one conducting wire (21) extending between said first and second electrical connection means,
said at least one conducting wire (21) extends across said viewing area (11), **characterized in**
**that** said at least one conducting wire (21) extends across said viewing area (21) a plurality of times along arc shaped paths (22, 23, 24, 25, 26, 27), each of said arc shaped paths is defined by a base (b) and one point (p), so as to minimize the amount of glare points along said resistance heating element (20).

2. The electrically heated window according to claim 1, **characterized in that** said arc shaped paths (22, 23, 24, 25, 26, 27) comprises a form with a radius (R1, R2, R3, R4, R5, R6) between 20-200 mm, preferably 30-150 mm, even more preferably 30-125 mm, most preferred 35-100 mm.

3. The electrically heated window according to claim 2, **characterized in that** at least 2 of 3 of said radiuses (R1, R2, R3, R4, R5, R6) are different with respect to each other.

4. The electrically heated window according to claim 3, **characterized in that** said arc shaped paths (22, 23, 24, 25, 26, 27) comprising a subsequently equal or increasing radius towards the lower edge of the viewing area 11.

5. The electrically heated window according to claim 4, **characterized in that** a first arc shaped path (22) closest to said upper edge (14) of said viewing area (11) comprises first radius (R1), subsequent second arc shaped path (23) comprises a second radius (R2), and of the subsequent following arc shaped paths wherein at least; a third arc shaped path (24) comprises a third radius (R3), a forth arc shaped path (25) comprises a forth radius (R4), and **in that** only said first radius and said second radius (R1, R2) are substantially equal.

6. The electrically heated window according to any preceding claims, **characterized in that** the conducting wire (21) crosses said viewing area (11) between 4-20 times.

7. The electrically heated window according to any preceding claims, **characterized in that** at least some of said arc shaped paths (22, 23, 24, 25, 26, 27) comprises a base (B) and a point (P) and **in that** said point faces towards said lower edge (15) of said viewing area (11) and **in that** said base (B) faces towards said upper edge (14) of said viewing area (11).

8. The electrically heated window according to claim 7, **characterized in that** all of said arc shaped paths (22, 23, 24, 25, 26, 27) comprises a base (B) and a point (P) and **in that** said points faces towards said lower edge (15) of said viewing area (11) and **in that** said bases (B) faces towards said upper edge (14) of said viewing area (11).

9. The electrically heated window according to any preceding claims, **characterized in that** said conducting wire (21) is arranged on said first side (1 a) of said window.

10. The electrically heated window according to any preceding claims, **characterized in that** said arc shaped path (22, 23, 24, 25, 26, 27) extends between and past said first and second edge (12, 13) of said viewing area (11).

11. The electrically heated window according to any preceding claims, **characterized in that** said viewing area comprises a virtual vertical centre line (6) and **in that** said arc shaped paths (22, 23, 24, 25, 26, 27) are arranged symmetrically with respect said vertical centre line (6).

12. The electrically heated window according to any preceding claims, **characterized in that** said conducting wire (21) is 0.1-0.5 mm thick within said viewing area.

13. The electrically heated window according to any preceding claims, **characterized in that** said window comprises a second resistance heating element.

14. The electrically heated window according to any preceding claims, **characterized in that** at least some of said points (P) of said arc shaped paths (22, 23, 24, 25, 26, 27) faces towards said upper edge (14) of said viewing area (11) and **in that** said base (B) faces towards said lower edge (15) of said viewing area (11).

15. The electrically heated window according to claim 14, **characterized in that** all said arc shaped paths comprises a base (B) and a point (P) and **in that** said points faces towards said upper edge (14) of said viewing area (11) and **in that** said bases (B) faces towards said lower edge (15) of said viewing area (11).

16. The electrically heated window according to claims 7 and 13, **characterized in that** said conducting wire and said arc shaped paths forms a spiral pattern.

17. A vehicle comprising an electrically heated window according to any preceding claims, said vehicle further comprises an imaging device arranged in working cooperation with said resistance heating element (20).

## Patentansprüche

1. Elektrisch beheiztes Fenster (1), umfassend eine erste und eine zweite Seite (1a, 1b), welches dafür gedacht ist, mit einer bildgebenden Vorrichtung (10) ausgestattet zu werden, die ein zu zeigendes Objekt durch einen Ansichtsbereich (11) des Fensters (1) zeigt, wobei der Ansichtsbereich (11) des Fensters (1) einen ersten und einen zweiten Rand (12, 13) sowie einen oberen und einen unteren Rand (14,15) umfasst,
wobei das Fenster (1) ein Widerstandserwärmungselement (20) umfasst, welches ein erstes und ein zweites elektrisches Verbindungsmittel zum Verbinden mit einer elektrischen Speisung sowie mindestens einen leitenden Draht (21), der sich zwischen dem ersten und dem zweiten elektrischen Verbindungsmittel erstreckt, umfasst,
wobei sich der wenigstens eine leitende Draht (21) über den Ansichtsbereich (11) erstreckt,
**dadurch gekennzeichnet, dass**
sich der wenigstens eine leitende Draht (21) mehrere Male entlang bogenförmiger Pfade (22, 23, 24, 25, 26, 27) über den Ansichtsbereich (11) erstreckt, wobei jeder der bogenförmigen Pfade durch eine Basis (b) und einen Scheitel (p) so definiert ist, dass die Anzahl von Blendpunkten entlang des Widerstandserwärmungselementes (20) minimiert ist.

2. Elektrisch beheiztes Fenster nach Anspruch 1, **dadurch gekennzeichnet, dass** die bogenförmigen Pfade (22, 23, 24, 25, 26, 27) eine Form mit einem Radius (R1, R2, R3, R4, R5, R6) umfassen, der zwischen 20 und 200 mm liegt, vorzugsweise zwischen 30 und 150 mm, noch bevorzugter zwischen 30 und 125 mm und am vorteilhaftesten zwischen 35 und 100 mm.

3. Elektrisch beheiztes Fenster nach Anspruch 2, **dadurch gekennzeichnet, dass** wenigstens zwei von drei der Radien (R1, R2, R3, R4, R5, R6) in Bezug aufeinander unterschiedlich sind.

4. Elektrisch beheiztes Fenster nach Anspruch 3, **dadurch gekennzeichnet, dass** die bogenförmigen Pfade (22, 23, 24, 25, 26, 27) in Richtung auf den unteren Rand des Ansichtsbereiches (11) zu einen aufeinanderfolgend gleichen oder größer werdenden Radius umfassen.

5. Elektrisch beheiztes Fenster nach Anspruch 4, **dadurch gekennzeichnet, dass** ein erster bogenförmiger Pfad (22), welcher dem oberen Rand (14) des Ansichtsbereichs (11) am nächsten liegt, einen ersten Radius (R1) beinhaltet, der nachfolgende zweite bogenförmige Pfad (23) einen zweiten Radius (R2) beinhaltet, dass die danach folgenden bogenförmigen Pfade, davon wenigstens ein dritter bogenförmiger Pfad (24) einen dritten Radius (R3) beinhaltet und ein vierter bogenförmiger Pfad (25) einen vierten Radius (R4) beinhaltet, und dass nur der erste Radius und der zweite Radius (R1, R2) im Wesentlichen gleich sind.

6. Elektrisch beheiztes Fenster nach einem der vorhergehenden Ansprüche, **dadurch gekennzeichnet, dass** der leitende Draht (21) den Ansichtsbereich (11) zwischen viermal und 20 mal kreuzt.

7. Elektrisch beheiztes Fenster nach einem der vorhergehenden Ansprüche, **dadurch gekennzeichnet, dass** wenigstens einige der bogenförmigen Pfade (22, 23, 24, 25, 26,27) eine Basis (B) und einen Scheitel (P) umfassen und dass der Scheitel in Richtung des unteren Randes (15) des Ansichtsbereiches (11) zeigt und dass die Basis (B) in Richtung des oberen Randes (14) des Ansichtsbereiches (11) zeigt.

8. Elektrisch beheiztes Fenster nach Anspruch 7, **dadurch gekennzeichnet, dass** alle der bogenförmigen Pfade (22, 23, 24, 25, 26,27) eine Basis (B) und einen Scheitel (P) umfassen und dass die Scheitel in Richtung des unteren Randes (15) des Ansichtsbereiches (11) zeigen und dass die Basen (B) in Richtung des oberen Randes (14) des Ansichtsbereiches (11) zeigen.

9. Elektrisch beheiztes Fenster nach einem der vorhergehenden Ansprüche, **dadurch gekennzeichnet, dass** der leitende Draht (21) auf der ersten Seite (1a) des Fensters angeordnet ist.

10. Elektrisch beheiztes Fenster nach einem der vorhergehenden Ansprüche, **dadurch gekennzeichnet, dass** sich der bogenförmige Pfad (22, 23, 24, 25, 26, 27) zwischen dem ersten und dem zweiten Rand (12, 13) des Ansichtsbereiches (11) und darüber hinaus erstreckt.

11. Elektrisch beheiztes Fenster nach einem der vorhergehenden Ansprüche, **dadurch gekennzeichnet, dass** der Ansichtsbereich eine virtuelle vertikale Mittellinie (6) umfasst, und dass die bogenförmigen Pfade (22, 23, 24, 25, 26, 27) symmetrisch bezüglich dieser vertikalen Mittellinie (6) angeordnet sind.

12. Elektrisch beheiztes Fenster nach einem der vorhergehenden Ansprüche, **dadurch gekennzeichnet, dass** der leitende Draht (21) innerhalb des Ansichtsbereiches zwischen 0,1 und 0,5 mm dick ist.

13. Elektrisch beheiztes Fenster nach einem der vorhergehenden Ansprüche, **dadurch gekennzeichnet, dass** das Fenster ein zweites Widerstandserwärmungselement umfasst.

14. Elektrisch beheiztes Fenster nach einem der vorhergehenden Ansprüche, **dadurch gekennzeichnet, dass** wenigstens einige der Scheitel (P) der bogenförmigen Pfade (22, 23, 24, 25, 26, 27) in Richtung des oberen Randes (14) des Ansichtsbereiches (11) zeigen und dass die Basen (B) in Richtung des unteren Randes (15) des Ansichtsbereiches (11) zeigen.

15. Elektrisch beheiztes Fenster nach Anspruch 14, **dadurch gekennzeichnet, dass** alle der bogenförmigen Pfade (22, 23, 24, 25, 26,27) eine Basis (B) und einen Scheitel (P) umfassen und dass die Scheitel in Richtung des oberen Randes (14) des Ansichtsbereiches (11) zeigen und dass die Basen (B) in Richtung des unteren Randes (15) des Ansichtsbereiches (11) zeigen.

16. Elektrisch beheiztes Fenster nach den Ansprüchen 7 und 13, **dadurch gekennzeichnet, dass** der leitende Draht und die bogenförmigen Pfade ein spiralförmiges Muster bilden.

17. Fahrzeug, umfassend ein elektrisch beheiztes Fenster nach einem der vorhergehenden Ansprüche, wobei das Fahrzeug weiter eine bildgebende Vorrichtung aufweist, die mit dem Widerstandserwärmungselement (20) zusammenwirkend angeordnet ist.

## Revendications

1. Vitre (1) chauffée électriquement, comprenant un premier et un deuxième côtés (1a, 1b), destinée à être équipée d'un dispositif imageur (10) qui voit un objet à imager à travers une zone de vision (11) de la vitre (1),
ladite zone de vision (11) de ladite vitre (1) comprenant un premier et un deuxième bords (12, 13) et un bord supérieur (14) et un bord inférieur (15),
ladite vitre (1) comprenant un élément (20) de chauffage par résistance comprenant un premier et un deuxième moyens de raccordement électrique pour un raccordement à une alimentation électrique, et au moins un fil conducteur (21) s'étendant entre lesdits premier et deuxième moyens de raccordement électrique,
ledit au moins un fil conducteur (21) s'étendant à travers ladite zone de vision (11), ***caractérisée en ce qu'**au* moins un fil conducteur (21) s'étend à travers ladite zone de vision (21) plusieurs fois, le long de trajets en arc de cercle (22, 23, 24, 25, 26, 27), chacun desdits trajets en arc étant défini par une base (b) et par un point (p), de façon à minimiser le nombre de points éblouissants le long dudit élément (20) de chauffage par résistance.

2. Vitre chauffée électriquement selon la revendication 1, ***caractérisée en ce que*** lesdits trajets en arc de cercle (22, 23, 24, 25, 26, 27) comprennent une forme avec un rayon (R1, R2, R3, R4, R5, R6) compris entre 20 et 200 mm, de manière préférée entre 30 et 150 mm, de manière encore plus préférée entre 30 et 125 mm, et très préférablement entre 35 et 100 mm.

3. Vitre chauffée électriquement selon la revendication 2, ***caractérisée en ce qu'**au* moins 2 sur 3 desdits rayons (R1, R2, R3, R4, R5, R6) sont différents les uns des autres.

4. Vitre chauffée électriquement selon la revendication 3, ***caractérisée en ce que*** lesdits trajets en arc de cercle (22, 23, 24, 25, 26, 27) comprennent un rayon consécutivement égal ou croissant vers le bord inférieur de la zone de vision (11).

5. Vitre chauffée électriquement selon la revendication 4, ***caractérisée en ce qu'**un* premier trajet (22) en arc de cercle le plus proche dudit bord supérieur (14) de ladite zone de vision (11) comprend un premier rayon (R1), un deuxième trajet consécutif en arc de cercle (23) comprend un deuxième rayon (R2), des trajets consécutifs suivants en arc de cercle, au moins un troisième trajet en arc de cercle (24) comprend un troisième rayon (R3), un quatrième trajet en arc de cercle (25) comprend un quatrième rayon (R4), et ***en ce que*** seuls ledit premier rayon et ledit deuxième rayon (R1, R2) sont essentiellement égaux.

6. Vitre chauffée électriquement selon l'une quelconque des revendications précédentes, ***caractérisée en ce que*** le fil conducteur (21) traverse ladite zone de vision (11) entre 4 et 20 fois.

7. Vitre chauffée électriquement selon l'une quelconque des revendications précédentes, ***caractérisée en ce qu'**au* moins certains desdits trajets en arc de cercle (22, 23, 24, 25, 26, 27) comprennent une base (B) et un point (P) et ***en ce que*** ledit point fait face audit bord inférieur (15) de ladite zone de vision (11) et ***en ce que*** ladite base (B) fait face audit bord supérieur (14) de ladite zone de vision (11).

8. Vitre chauffée électriquement selon la revendication 7, ***caractérisée en ce que*** tous lesdits trajets en arc de cercle (22, 23, 24, 25, 26, 27) comprennent une base (B) et un point (P) et ***en ce que*** lesdits points font face audit bord inférieur (15) de ladite zone de vision (11) et ***en ce que*** lesdites bases (B) font face audit bord supérieur (14) de ladite zone de vision (11).

9. Vitre chauffée électriquement selon l'une quelconque des revendications précédentes, ***caractérisée en ce que*** ledit fil conducteur (21) est disposé sur ledit premier côté (1a) de ladite vitre.

10. Vitre chauffée électriquement selon l'une quelconque des revendications précédentes, ***caractérisée en ce que*** ledit trajet en arc de cercle (22, 23, 24, 25, 26, 27) s'étend entre, et au-delà, desdits premier et deuxième bords (12, 13) de ladite zone de vision (11).

11. Vitre chauffée électriquement selon l'une quelconque des revendications précédentes, ***caractérisée en ce que*** ladite zone de vision comprend une ligne centrale verticale virtuelle (6) et ***en ce que*** lesdits trajets en arc de cercle (22, 23, 24, 25, 26, 27) sont disposés symétriquement par rapport à ladite ligne centrale verticale (6).

12. Vitre chauffée électriquement selon l'une quelconque des revendications précédentes, ***caractérisée en ce que*** ledit fil conducteur (21) est d'une épaisseur de 0,1 à 0,5 mm dans ladite zone de vision.

13. Vitre chauffée électriquement selon l'une quelconque des revendications précédentes, ***caractérisée en ce que*** ladite vitre comprend un deuxième élément de chauffage par résistance.

14. Vitre chauffée électriquement selon l'une quelconque des revendications précédentes, ***caractérisée en ce qu'**au* moins certains desdits points (P) desdits trajets en arc de cercle (22, 23, 24, 25, 26, 27) font face audit bord supérieur (14) de ladite zone de vision (11) et ***en ce que*** ladite base (B) fait face audit bord inférieur (15) de ladite zone de vision (11).

15. Vitre chauffée électriquement selon la revendication 14, ***caractérisée en ce que*** tous lesdits trajets en arc de cercle comprennent une base (B) et un point (P) et ***en ce que*** lesdits points font face audit bord supérieur (14) de ladite zone de vision (11) et ***en ce que*** lesdites bases (B) font face audit bord inférieur (15) de ladite zone de vision (11).

16. Vitre chauffée électriquement selon les revendications 7 et 13, ***caractérisée en ce que*** ledit fil conducteur et lesdits trajets en arc de cercle forment un motif en spirale.

17. Véhicule comprenant une vitre chauffée électriquement selon l'une quelconque des revendications précédentes, ledit véhicule comprenant en outre un dispositif imageur agencé en coopération active avec ledit élément (20) de chauffage par résistance.
